Europäisches Patentamt

European Patent Office

Office européen des brevets

(11) Numéro de publication : **0 481 845 A1**

(12) # DEMANDE DE BREVET EUROPEEN

(21) Numéro de dépôt : **91402673.7**

(22) Date de dépôt : **07.10.91**

(51) Int. Cl.⁵ : **A01C 15/00**

(30) Priorité : **15.10.90 FR 9012696**

(43) Date de publication de la demande :
**22.04.92 Bulletin 92/17**

(84) Etats contractants désignés :
**AT BE CH DE DK ES GB GR IT LI LU NL SE**

(71) Demandeur : **NODET-GOUGIS**
**5 Boulevard du Général-Leclerc B.P. 36**
**F-77130 Montereau (FR)**

(72) Inventeur : **Coudert, Pierre**
**11, rue des enfants**
**F-77130 Montereau (FR)**

(74) Mandataire : **Chassagnon, Jean-Alain et al**
**Cabinet Harlé et Phélip 21, rue de la**
**Rochefoucauld**
**F-75009 Paris (FR)**

(54) **Régulateur de débit pour machine de distribution par gravité de produits en vrac.**

(57)    Régulateur de débit pour machine de distribution par gravité de produits en vrac contenus
dans une trémie (1) dont l'écoulement s'effectue au travers d'une ouverture réglable (2)
disposée au fond de ladite trémie (1), et constituée par une trappe (4) coulissant suivant son
axe, caractérisé en ce qu'il comporte un agitateur (5) équipé d'une plaque de commande (6)
qui s'applique contre la trappe (4) lorsqu'elle
est en position fermée, ledit agitateur (5) étant
muni de moyens de rappel élastiques (7) agissant suivant l'axe de la trappe (4) et dans le
même sens que l'ouverture de ladite trappe (4),
de manière que lors de l'ouverture de la trappe
(4), l'agitateur (5) se déplace dans le même sens
que la trappe (4) sous l'action des moyens
élastiques (7) pour venir en contact avec un
actionneur à secousses axiales (9), qui anime
l'agitateur (5) d'un mouvement alternatif suivant
l'axe de ladite trappe (4).

FIG.1

EP 0 481 845 A1

La présente invention se rapporte à un régulateur de débit pour machine de distribution par gravité de produits en vrac, qui sont contenus dans une trémie, et dont l'écoulement s'effectue au travers d'une ouverture réglable, qui est disposée au fond de cette trémie. La présente invention concerne plus particulièrement des machines de distribution d'engrais granulés, de semence, de sel ou de sable contenus dans une trémie, et elle s'applique plus précisément à des machines agricoles tels que des semoirs ou des épandeurs d'engrais.

Le brevet français n° 2 432 827, le certification d'utilité français n° 2 588 836, et la demande de brevet français n° 2 589 314 se rapportent également à des régulateurs de débit pour des épandeurs d'engrais ou des semoirs.

L'épandeur d'engrais décrit dans le brevet français n° 2 432 827 comporte une trémie avec une ouverture inférieure qui est fermée par une trappe à coulissement horizontal. A la partie basse de cette trémie, est disposé un système d'agitateur à axe horizontal, qui est supporté par un palier situé à l'extérieur de la trémie et raccordé à un des côtés de celle-ci. Cet agitateur est constitué par un arbre, qui pénètre à l'intérieur de la trémie, et qui porte un certain nombre de griffes disposées radialement, de manière à pouvoir remuer les produits en vrac stockés dans la trémie. Cet arbre d'agitateur est entraîné en rotation par une prise de mouvement, qui est effectuée sur la transmission en rotation du mouvement ou le plateau rotatif de l'épandeur ou du semoir. Cette prise de mouvement peut s'effectuer de différentes manières, de façon à obtenir un mouvement de rotation continu à vitesse réduite, ou un mouvement alterné rotatif de battement. Ce type d'agitateur présente ainsi la caractéristique de fonctionner, que la trappe inférieure soit ouverte ou fermée. Dans le cas où l'ouverture d'écoulement est fermée, et bien que l'agitateur tourne à vitesse réduite, ou qu'il batte à une cadence relativement modérée, il ne peut être évité une modification des caractéristiques du produit en vrac ainsi stocké, qui est remué sans aucun écoulement continu; cette modification se traduit par un mauvais écoulement (et par conséquent une mauvaise répartition) du produit lors de l'ouverture suivante de la trappe.

Le certificat d'utilité français n° 2 588 836 se rapporte à un agitateur de distribution par gravité de produits en vrac, qui est disposé à la partie inférieure d'une trémie. Cet agitateur est constitué par une tige verticale disposée à la partie basse de la trémie, et qui est reliée par un ressort à un arbre horizontal de commande de mouvement. Cette tige verticale appelée doigt est ainsi reliée élastiquement à l'arbre horizontal de commande, qui est lui-même commandé par une prise de mouvement disposée sur la transmission du plateau rotatif du semoir ou de l'épandeur d'engrais. Cette prise de mouvement commande un système à excentrique qui entraîne une barre verticale de transmission de mouvement se terminant par une chappe, qui commande une biellette de l'arbre horizontal de commande du doigt. Cet ensemble permet ainsi d'entraîner le doigt dans un mouvement alternatif de rotation, de façon à assurer le remuage des produits en vrac disposés dans la trémie. La liaison souple entre le doigt et l'arbre horizontal de commande permet à ce doigt de s'arrêter automatiquement lorsque la trappe disposée à la partie inférieure est fermée. Cependant, du fait du tassement du produit, il y a un certain décalage entre la fermeture de cette trappe, et la continuation du mouvement de battement du doigt ce qui entraîne une modification des caractéristiques des produits en vrac qui sont stockés dans la trémie; cette modification se traduit par un mauvais écoulement (et par conséquent une mauvaise répartition) du produit lors de l'ouverture suivante de la trappe.

La demande de brevet français n° 2 589 314 se rapporte à un agitateur pour épandeur d'engrais. Cet agitateur est disposé dans la partie inférieure d'une trémie, qui est fermée par une trappe à coulissement horizontal. Cette trappe donne ainsi une ouverture qui alimente un disque épandeur disposé en dessous de cette trémie. L'agitateur est conçu pour l'entraînement rotatif et est disposé dans le fond de la trémie. Cet agitateur est constitué par une partie centrale de moyeu qui est munie de doigts faisant saillie radialement. Cette partie centrale de moyeu est conçue pour tourner autour de son axe propre et peut tourner en même temps autour d'un axe fixe par rapport au récipient, qui est parallèle à l'axe de la partie centrale du moyeu. Cet axe fixe est également l'axe de rotation du disque épandeur. Cette disposition excentrée des doigts de l'agitateur permet de remuer convenablement sur toute la partie inférieure le produit en vrac disposé dans la trémie. Cependant, cet agitateur peut continuer de tourner, une fois la trappe inférieure fermée, ce qui peut entraîner une modification des caractéristiques du produit en vrac disposé dans la trémie; cette modification se traduit par un mauvais écoulement (et par conséquent une mauvaise répartition) du produit lors de l'ouverture suivante de la trappe.

Le but de l'invention est d'éviter les inconvénients mentionnés ci-dessus, et de proposer un régulateur de débit pour machine de distribution par gravité de produits en vrac contenus dans une trémie, dont l'écoulement s'effectue au travers d'une ouverture réglable disposée au fond de ladite trémie, et qui n'entre en action que lorsque l'ouverture d'écoulement est ouverte.

Selon un mode de réalisation de l'invention, le régulateur de débit se rapporte à une machine de distribution par gravité de produits en vrac qui sont contenus dans une trémie, et dont l'écoulement s'effectue au travers d'une ouverture réglable. Cette ouverture réglable est disposée au fond de cette trémie, et elle est constituée par une trappe, qui coulisse suivant un axe de déplacement. Ce régulateur de débit comporte un agitateur, qui est équipé d'une plaque de commande, qui vient s'appliquer contre la trappe, lorsque celle-ci est en position fermée. De plus, cet agitateur est muni de moyens de rappel élastiques qui agissent suivant l'axe de la trappe, et dans le même sens que l'ouverture de cette trappe. Ainsi, lors de l'ouverture de la trappe, l'agitateur se déplace dans le même sens que la trappe sous l'action des moyens élastiques pour venir en contact avec un actionneur à secousses axiales. L'actionneur anime alors l'agitateur d'un mouvement alternatif suivant l'axe de déplacement de la trappe.

Avantageusement, l'agitateur est constitué en un arbre de commande dont l'axe est parallèle à l'axe de la trappe. Cet arbre de commande est supporté par deux paliers qui sont fixés sur les parois opposées de la trémie. Cet axe de commande porte un système de griffes qui est disposé entre les deux paliers, et qui est plus précisément constitué en quatre éléments radiaux disposés en croix, et situés sensiblement au centre de l'arbre de commande par rapport aux deux paliers. La plaque de commande est à l'extérieur de la trémie, et elle est agencée de manière à s'appuyer sur le côté correspondant de la trappe, qui est perpendiculaire à l'axe de déplacement de la trappe. Les moyens de rappel élastiques sont montés du côté opposé à la plaque de commande, et à l'extérieur de la trémie.

Plus précisément, les moyens de rappel élastiques consistent en un ressort de compression qui est disposé entre un élément fixe, solidaire de la trémie, et une collerette qui est aménagée à l'extrémité de l'arbre de commande. Ce ressort de compression est monté directement sur l'arbre de commande.

Selon une variante de l'invention, les moyens élastiques consistent en un ressort de traction, qui est disposé entre un élément fixe solidaire de la trémie, et l'extrémité correspondante de l'axe de commande.

L'actionneur à secousses axiales peut agir directement sur la plaque de commande; ou dans un autre mode de réalisation de l'invention, agir directement sur l'extrémité de l'arbre de commande, qui est opposé à la plaque de commande.

Dans la configuration de l'invention, l'ouverture et la fermeture de la trappe sont actionnées par un dispositif de manoeuvre. Ce dispositif de manoeuvre peut être, suivant les différentes variantes de réalisation de la présente invention: un dispositif de manoeuvre à commande manuelle, un dispositif de manoeuvre à commande à câble, un dispositif de manoeuvre à commande hydraulique plus précisément par un vérin hydraulique à simple effet avec des moyens élastiques de rappel consistant en un ressort de traction, ou un dispositif de manoeuvre électrique par un vérin électrique.

Selon un mode de réalisation de l'invention, le régulateur de débit s'applique à une machine de distribution du type centrifuge, qui est munie d'une ou plusieurs trémies. Chaque trémie est équipée d'un plateau rotatif à axe vertical qui est disposé en dessous de la trappe.

Dans une variante de l'invention, l'actionneur à secousses axiales agit sur la plaque de commande au moyen d'un système à excentrique. Ce système à excentrique est monté sur l'extrémité supérieure de l'axe du plateau rotatif, et il consiste plus particulièrement en un roulement à bille, qui est disposé de manière, que son axe soit décalé par rapport à l'axe du plateau rotatif.

Selon un autre mode de réalisation de l'invention, l'actionneur à secousses axiales agit sur l'extrémité de l'arbre de commande qui est opposé à !a plaque de commande, et ceci au moyen d'un système à excentrique. Plus particulièrement, le système à excentrique reçoit le mouvement de l'arbre de transmission de commande du ou des plateaux rotatifs.

Selon l'invention, le procédé de commande d'un régulateur de débit pour machine de distribution par gravité de produits en vrac, qui sont contenus dans une trémie, et dont l'écoulement s'effectue au travers d'une ouverture réglable disposée au fond de ladite trémie, est caractérisé en ce que l'ouverture de la trappe commande la mise en mouvement de l'agitateur sous l'effet de l'actionneur à secousses axiales, et que la fermeture de la trappe commande l'arrêt de cet agitateur.

Le régulateur de débit pour machine de distribution par gravité de produits en vrac contenus dans une trémie selon l'invention, présente ainsi l'avantage déterminant de ne jamais remuer les produits stockés dans la trémie, lorsque la trappe est fermée. De ce fait, le produit conserve toutes ses caractéristiques et notamment celles de granulométrie, il n'y a aucun risque de constitution d'agglomérats, que les particules soient brisées, ou qu'elles prennent en masse par la chaleur de frottement les unes sur les autres.

D'autres avantages ressortiront de l'invention, qui sera mieux comprise à l'aide de la description, donnée ci-dessous, d'exemples particuliers de réalisations, décrits à titre non limitatif, en référence aux dessins annexés sur lesquels:

– la figure 1 est une vue schématique en coupe transversale partielle de l'ensemble du régulateur de débit selon l'invention pour machine de distribution par gravité de produits en vrac contenus dans une trémie;
– la figure 2 est une vue analogue à la figure 1 d'un autre mode de réalisation de l'invention;
– la figure 3 est une vue de dessus suivant 3 de la figure 1;
– la figure 4 est une vue de détail de la figure 1, d'une variante de l'invention.

Le régulateur de débit selon l'invention représenté sur les figures s'applique à des machines de distribution par gravité de produits en vrac contenus dans une trémie 1. Ces produits peuvent être des granulés d'engrais, des semences, du sel, du sable, ou tout autre produit en vrac qu'on peut être appelé à utiliser notamment en agriculture. Ce type de régulateur de débit selon l'invention s'applique notamment à des épandeurs d'engrais et à des semoirs. Dans ce type de machines, l'écoulement des produits en vrac s'effectue au travers d'une ouverture réglable 2 qui est disposée au fond de la trémie 1. Cette ouverture réglage 2 est constituée par une trappe 4 qui coulisse suivant son axe de déplacement. Le régulateur de débit comporte essentiellement un agitateur référencé 5 dans son ensemble, qui est mis en mouvement par un actionneur à secousses axiales référencé 9 dans son ensemble. L'agitateur 5 est équipé d'une plaque de commande 6, qui vient s'appliquer contre la trappe 4 lorsqu'elle est en position fermée. L'agitateur 5 est muni de moyens de rappel élastiques, qui agissent suivant l'axe de la trappe 4, et qui poussent ou tirent dans le même sens que cette ouverture de la trappe 4. Ainsi, lors de l'ouverture de la trappe 4, l'agitateur 5 se déplace dans le même sens que cette trappe 4 sous l'action des moyens élastiques, et de cette manière, l'agitateur 5 vient en contact avec l'actionneur à secousses axiales 9, qui anime alors cet agitateur 5 d'un mouvement alternatif suivant l'axe de cette trappe 4.

Dans les modes de réalisation de l'invention représentés sur les figures, la machine de distribution est un distributeur du type centrifuge, qui est munie d'une ou plusieurs trémies 1; dont chaque trémie est équipée d'un plateau rotatif 10 à axe vertical, qui est disposé en dessous de cette trémie 1, c'est-à-dire en dessous de la trappe 4 correspondante.

Selon l'invention, l'agitateur 5 consiste en un arbre de commande 11, dont l'axe est parallèle à l'axe de déplacement de la trappe 4. Cet arbre de commande 11 est supporté par deux paliers référencés 12 et 13, qui sont fixés chacun sur l'une des parois 14 de la trémie 1 qui se font face. Cet axe de commande 11 porte un système de griffes 15, qui est disposé entre les deux paliers 12 et 13. La plaque de commande 6 est disposée à l'extérieur de la trémie 1, et elle est solidaire de l'extrémité 18 de l'arbre de commande 11. L'autre extrémité 19 de l'arbre de commande 11 comporte une collerette 20. La plaque de commande 6 est agencée de manière à venir s'appuyer sur le côté correspondant de la trappe 4, c'est-à-dire le côté qui est perpendiculaire à l'axe de cette trappe 4. Plus précisément, la plaque de commande 6 a une dimension verticale suffisante pour venir d'une part se fixer à l'extrémité 18 de l'arbre de commande 11 avec laquelle elle est solidaire et pour venir d'autre part, s'appuyer sur le côté correspondant de la trappe 4, qui est disposée en dessous de l'arbre de commande 11.

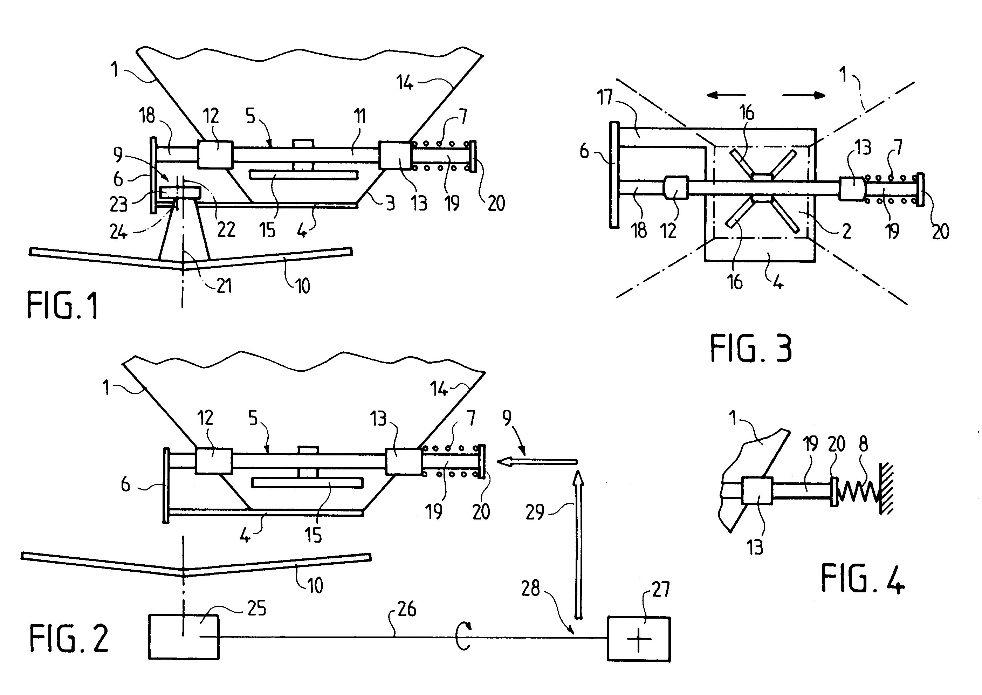

Les moyens de rappel élastiques de l'agitateur 5, sont montés du côté opposé à la plaque de commande 6, c'est-à-dire du côté de l'extrémité 19 de l'arbre de commande 11, et ils sont disposés à l'extérieur de la trémie 1. Dans le mode de réalisation représenté sur la figure 1, les moyens de rappel élastiques consistent en un ressort de compression 7 qui est disposé entre un élément fixe solidaire de la trémie 1 et la collerette 20 qui est aménagée à l'extrémité 19 de l'arbre de commande 11. Ce ressort de compression 7 est monté sur l'arbre de commande 11, et vient s'appuyer sur un élément du palier 13 fixé sur une des parois 14 de la trémie 1.

Dans une variante de l'invention représentée sur la figure 4, des moyens de rappel élastiques de l'agitateur 5 consistent en un ressort de traction 8, qui est disposé entre un élément fixe solidaire de la trémie 1, et l'extrémité 19 correspondante de l'arbre de commande 11.

Comme on peut le voir sur la figure 3, le système de griffes 15 consiste en quatre éléments radiaux 16 qui sont disposés en croix, et qui sont situés sensiblement au centre de l'arbre de commande 11, et ceci par rapport aux deux paliers 12 et 13. Sans sortir du cadre de l'invention, on pourrait également prévoir tout autre système de griffes disposé sur cet arbre de commande 11.

Dans le mode de réalisation représenté sur la figure 1, l'actionneur à secousses axiales 9 agit directement sur la plaque de commande 6, c'est-à-dire qu'il agit sur l'extrémité 18 de l'arbre de commande 11 de l'agitateur 5. Dans ce cas, l'actionneur à secousses axiales 9 consiste en un système à excentrique, qui est monté sur l'extrémité supérieure 22 de l'axe vertical 21 du plateau rotatif 10 à axe vertical. Plus précisément, ce système à excentrique consiste en un roulement à bille 23, qui est disposé de manière que son axe 24 soit parallèle et décalé par rapport à l'axe vertical du plateau rotatif 10.

Selon le mode de réalisation de l'invention représenté sur la figure 2, l'actionneur à secousses axiales 9 agit sur l'extrémité 19 de l'arbre de commande 11, qui est du côté opposé à la plaque de commande 6. Dans le cas de la figure, cet actionneur à secousses axiales 9 consiste en un système à excentrique qui agit sur l'extrémité 19 de l'arbre de commande 11. Ce système à excentrique reçoit le mouvement de l'arbre de transmission 26 de commande du ou des plateaux rotatifs 10 à axe vertical du distributeur centrifuge; et cela se fait au moyen d'une prise de mouvement 28, qui est disposée en aval d'une boite de distribution 27 de l'ensemble du système de transmission de mouvements de la machine, qui comporte également un renvoi d'angle 25 de commande de mouvements de chacun des plateaux rotatifs à axe vertical 10.

Selon l'invention, le procédé de commande d'un régulateur de débit pour machine de distribution par gravité de produits en vrac contenus dans une trémie 1, et dont l'écoulement s'effectue au travers d'une ouverture réglable 2 disposée au fond 3 de ladite trémie 1, consiste en ce que c'est l'ouverture de la trappe 4, qui commande la mise en mouvement de l'agitateur 5 sous l'effet de l'actionneur à secousses axiales 9, et que c'est la fermeture de la trappe 4 qui commande l'arrêt de l'agitateur 5. En effet, dès le début de l'ouverture de la trappe 4, la plaque de commande 6 vient en contact avec le système à excentrique du plateau rotatif à axe vertical 10, ceci sous l'action des moyens élastiques de l'arbre de commande 11, c'est-à-dire selon les variantes de réalisation sous l'action du ressort de compression 7, ou sous l'action du ressort de traction 8. Lors de la fermeture de la trappe 4, et en fin du mouvement de fermeture de cette trappe 4, l'extrémité 17 de la trappe 4 vient s'appuyer contre la plaque de commande 6, puis vient la pousser en contrariant l'action du ressort de compression 7 ou du ressort de traction 8, de manière à l'écarter du système à excentrique, et de ce fait, l'actionneur à secousses axiales 9 n'agit plus sur l'agitateur 5, qui s'arrête immédiatement.

Dans le mode de réalisation représenté sur la figure 2, l'actionneur à secousses axiales 9 agit directement sur l'extrémité 19 de l'arbre de commande 11, dans ce cas, lors de l'ouverture de la trappe 4, l'arbre de commande 11 se déplace sous l'action des moyens élastiques, c'est-à-dire sous l'action du ressort de compression 7 ou du ressort de traction 8, et ce mouvement de l'arbre de commande 11 lui permet de venir en contact contre le système à excentrique 29, qui agit alors sur l'extrémité 19 de cet arbre de commande 11. Lors du mouvement opposé de la trappe 4, c'est-à-dire au moment de la fin de la fermeture de cette trappe 4, l'extrémité 17 de la trappe 4 vient en contact contre la plaque de commande 6 pour la pousser dans le sens opposé à l'action des ressorts de compression 7 ou de traction 8, de manière à arrêter immédiatement l'action du système à excentrique 29 sur l'extrémité 19 de l'arbre de commande 11. De ce fait, l'agitateur 5 s'arrête aussitôt.

Le régulateur de débit pour distribution par gravité de produits en vrac selon l'invention, présente ainsi la caractéristique essentielle et l'avantage de n'entrer en action que lorsque l'ouverture réglable de l'écoulement est ouverte, c'est-à-dire que lorsque la trappe 4 est actionnée. Le produit à distribuer conserve ainsi toutes ses caractéristiques, et son dosage et sa distribution restent constants. De ce fait, on évite l'inconvénient de l'écrasement et de la cassure des grains, ainsi que la formation d'agglomérats, ou que les particules se prennent en masse par chaleur de frottement. Le régulateur de débit selon l'invention présente ainsi l'avantage déterminant de garantir le maintien des caractéristiques de granulométrie.

Selon l'invention, l'ouverture et la fermeture de la trappe 4 sont actionnées par un dispositif de manoeuvre. Ce dispositif n'est pas représenté sur les figures, mais il peut être tout simplement à commande manuelle. Dans une variante de l'invention, ce dispositif de manoeuvre de la trappe 4 est un dispositif de commande à câble. Selon une autre variante de l'invention, l'ouverture et la fermeture de la trappe 4 sont actionnées par un dispositif de manoeuvre à commande hydraulique, qui peut être constitué par un vérin hydraulique à simple effet avec des moyens élastiques de rappel, qui consiste en un ressort de traction. Selon une variante de l'invention, l'ouverture et la fermeture de la trappe 4 sont actionnées par un dispositif de manoeuvre électrique, qui est constitué par un vérin électrique.

## Revendications

1. Régulateur de débit pour machine de distribution par gravité de produits en vrac contenus dans une trémie (1) dont l'écoulement s'effectue au travers d'une ouverture réglable (2) disposée au fond de ladite trémie (1), et constituée par une trappe (4) coulissant suivant son axe, caractérisé en ce qu'il comporte un agitateur (5) équipé d'une plaque de commande (6) qui s'applique contre la trappe (4) lorsqu'elle est en position fermée, ledit agitateur (5) étant muni de moyens de rappel élastique (7, 8) agissant suivant l'axe de la trappe (4) et dans le même sens que l'ouverture de ladite trappe (4), de manière que lors de l'ouverture de la trappe (4), l'agitateur (5) se déplace dans le même sens que la trappe (4) sous l'action des moyens élastiques (7,8) pour venir en contact avec un actionneur à secousses axiales (9), qui anime l'agitateur (5) d'un mouvement alternatif suivant l'axe de déplacement de ladite trappe (4).

2. Régulateur de débit selon la revendication 1, caractérisé en ce que l'agitateur (5) consiste en un arbre de commande (11) dont l'axe est parallèle à l'axe de déplacement de la trappe (4) et qui est supporté par deux paliers (12) et (13) fixés sur les parois (14) de la trémie (1), cet axe de commande (11) portant un système de griffes (15) disposé entre les deux paliers (12) et (13) et la plaque de commande (6) étant à l'extérieur de la trémie (1) solidaire de l'extrémité (18) de l'arbre de commande (11) et agencée de manière à s'appuyer sur le côté (17) correspondant de la trappe (4) perpendiculaire à l'axe de déplacement de la trappe (4).

3. Régulateur de débit selon la revendication 2, caractérisé en ce que les moyens de rappel élastique sont montés du côté opposé (19) de la plaque de commande (6) à l'extérieur de la trémie (1).

4. Régulateur de débit selon la revendication 3, caractérisé en ce que les moyens de rappel élastique consistent en un ressort de compression (7) disposé entre un élément fixe solidaire de la trémie (1) et une collerette (20) aménagée à l'extrémité (19) de l'arbre de commande (11), ledit ressort de compression (7) étant monté sur l'arbre de commande (11).

5. Régulateur de débit selon la revendication 3, caractérisé en ce que les moyens de rappel élastiques consistent en un ressort de traction (8) disposé entre un élément fixe solidaire de la trémie (1) et l'extrémité (19) correspondante de l'arbre de commande (11).

6. Régulateur de débit selon la revendication 2, caractérisé en ce que le système de griffes (15) consiste en quatre éléments radiaux (16) disposés en croix; sensiblement au centre de l'arbre de commande (11) par rapport aux deux paliers (12) et (13).

7. Régulateur de débit selon la revendication 1, caractérisé en ce que l'actionneur à secousses axiales (9) agit sur la plaque de commande (6).

8. Régulateur de débit selon la revendication 1, caractérisé en ce que l'actionneur à secousses axiales (9) agit sur l'extrémité (19) de l'arbre de commande (11) opposée à la plaque de commande (6).

9. Régulateur de débit selon la revendication 1, caractérisé en ce que l'ouverture et la fermeture de la trappe (4) sont actionnées par un dispositif de manoeuvre.

10. Régulateur de débit selon la revendication 9, caractérisé en ce que l'ouverture et la fermeture de la trappe (4) sont actionnées par un dispositif de manoeuvre à commande manuelle.

11. Régulateur de débit selon la revendication 9, caractérisé en ce que l'ouverture et la fermeture de la trappe (4) sont actionnées par un dispositif de manoeuvre à commande à câble.

12. Régulateur de débit selon la revendication 9, caractérisé en ce que l'ouverture et la fermeture de la trappe (4) sont actionnées par un dispositif de manoeuvre à commande hydraulique.

13. Régulateur de débit selon la revendication 12, caractérisé en ce que l'ouverture et la fermeture de la trappe (4) sont actionnées par un vérin hydraulique à simple effet avec des moyens élastiques de rappel.

14. Régulateur de débit selon la revendication 13, caractérisé en ce que les moyens élastiques de rapppel consistent en un ressort de traction.

15. Régulateur de débit selon la revendication 9, caractérisé en ce que l'ouverture et la fermeture de la trappe (4) sont actionnées par un dispositif de manoeuvre électrique.

16. Régulateur de débit selon la revendication 15, caractérisé en ce que l'ouverture et la fermeture de la trappe (4) sont actionnées par un vérin électrique.

17. Régulateur de débit selon l'une des revendications précédentes caractérisé en ce que la machine de distribution est un distributeur du type centrifuge muni d'une ou plusieurs trémies (1); chaque trémie (1) étant équipée d'un plateau rotatif (10) à axe vertical disposé en dessous de la trappe (4).

18. Régulateur de débit selon la revendication 17, caractérisé en ce que l'actionneur à secousses axiales (9) agit sur la plaque de commande (6) au moyen d'un système à excentrique.

19. Régulateur de débit selon la revendication 18, caractérisé en ce que le système à excentrique est monté sur l'extrémité supérieure (22) de l'axe vertical (21) du plateau rotatif (10).

20. Régulateur de débit selon la revendication 19, caractérisé en ce que le système à excentrique consiste en un roulement à billes (23) qui est disposé de manière que son axe (24) soit décalé par rapport à l'axe du plateau rotatif (10).

21. Régulateur de débit selon la revendication 17, caractérisé en ce que l'actionneur à secousses axiales agit sur l'extrémité (19) de l'arbre de commande (11) opposée à la plaque de commande (6) au moyen d'un système excentrique.

22. Régulateur de débit selon la revendication 21, caractérisé en ce que le système excentrique reçoit le mouvement de l'arbre de transmission (26) de commande du ou des plateaux rotatifs (10).

23. Procédé de commande d'un régulateur de débit pour machine de distribution par gravité de produits en vrac contenus dans une trémie (1), dont l'écoulement s'effectue au travers d'une ouverture réglable (2) disposée au fond (3) de ladite trémie (1), caractérisé en ce que c'est l'ouverture de la trappe (4) qui commande la mise en mouvement de l'agitateur (5) sous l'effet de l'actionneur à secousses axiales (9), et que c'est la fermeture de la trappe (4) qui commande l'arrêt de l'agitateur (5).

FIG. 3

FIG. 4

FIG.1

FIG. 2

Office européen
des brevets

**RAPPORT DE RECHERCHE EUROPEENNE**

Numero de la demande

EP    91 40 2673

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-2 676 695 (STEELE)<br><br>* colonne 3, ligne 14 - colonne 4, ligne 64; figures 1-5 *<br>--- | 1-3,5,7, 9,11,14, 18,23 | A01C15/00 |
| A | DE-C-3 532 756 (BERGMANN)<br><br>* colonne 2, ligne 64 - colonne 4, ligne 53; figures 1,2,3 *<br>--- | 1,2,17, 20 | |
| A | DE-U-8 632 954 (WEICHS)<br>* le document en entier *<br>--- | 1 | |
| A | US-A-4 472 091 (CALLAHAN)<br>* colonne 2, ligne 36 - colonne 3, ligne 41; figures 1,2,5 *<br><br>----- | 1,23 | |

**DOMAINES TECHNIQUES RECHERCHES (Int. Cl.5 )**

A01C
B65D

Le présent rapport a été établi pour toutes les revendications

| Lieu de la recherche | Date d'achèvement de la recherche | Examinateur |
|---|---|---|
| LA HAYE | 17 JANVIER 1992 | VERMANDER R.H. |

EPO FORM 1503 03.82 (P0402)